# EUROPEAN PATENT APPLICATION

(11) **EP 4 703 087 A1**
(43) Date of publication of application: **04.03.2026**
(21) Application number: 25198946.3
(22) Date of filing: 29.08.2025
(51) Int. Cl.: B24B 7/10, B24B 15/03, B24B 19/02, B24B 27/00, B24B 27/033, B24B 23/08, B23B 3/26

(54) **GRINDER FOR FLANGES**

(30) Priority: 29.08.2024 NO 20240883
(71) Applicant: GH Mekanisk AS, 5132 Nyborg (NO)
(72) Inventor: Arnøy Hjortland, Geir, 5132 Nyborg (NO)
(74) Representative: Acapo Onsagers AS

(57) **Abstract**

A grinding machine for grinding and polishing sealing surfaces in sealing grooves on flanges (20), comprising a frame (1) adapted to be clamped onto the flange (20), wherein the frame (1) comprises a plurality of slots (3) running radially outward, each slot (3) of the frame (1) comprises a displaceable fastening device (2) which runs through the frame (1) and which is adapted to be clamped against a rear side of the flange (20). A rotatable grinding wheel (7) is centrally mounted in the frame (1), wherein the grinding wheel (7) comprises a plurality of slots (10) running radially outward, each slot (10) of the grinding wheel (7) comprising a displaceable grinding head (8) having a profile adapted for insertion into the sealing groove of the flange (20), and a drive motor (11) for rotating the grinding wheel (7). The grinding heads (8) are adapted to rotate against the sealing surfaces in the sealing groove during application of axial pressure.

## Description

### Field of invention

The present invention relates to a grinding machine for grinding and polishing sealing surfaces in sealing grooves on flanges.

### Background to the invention

Flange connections are currently used extensively in all types of process industries where pipes are connected to each other or to other equipment. A gasket is installed between the flanges and pressed together using bolts to achieve a seal in the joints. The condition of the sealing surfaces in the flanges is therefore crucial to prevent leakage of the media being transported. Cleaning and maintenance of these sealing surfaces is currently mainly carried out by manual grinding and cleaning. The quality of the maintenance work performed varies greatly depending on the competence of the mechanic performing the work, the time spent, and the tools available. Due to small tolerances in sealing surfaces, incorrect execution can easily cause damage that requires greater repairs.

Time is also an important factor, as thorough manual cleaning and maintenance can in many cases take several hours to achieve an acceptable result. The tools mainly used for this are polishing cloths, sanding sponges, sandpaper, steel and brass brushes, gasket scrapers, etc. If sealing surfaces are not properly maintained and cleaned of corrosion, dirt, and deposits, incipient damage may be overlooked.

Contamination of sealing surfaces can also contribute to corrosion problems, which will cause further deterioration of the sealing surfaces. If damage is allowed to develop over time, this can lead to a high risk of leaks if the sealing surface is broken. In cases where such deterioration has occurred over time, sealing surfaces will need to be repaired before reassembly.

Current repair methods are largely based on swarf-removing machining of sealing surfaces carried out by personnel with specialist expertise and specialized equipment and tools. This is often combined with welding of material onto sealing surfaces in order to have sufficient metal to machine and at the same time remain within the tolerances of the specified standard dimensions.

These are very invasive and extensive operations that involve high costs and, in some cases, production downtime while repairs are carried out. In most cases, external personnel must be hired with specialized machinery to perform this type of work.

In many cases, when opening flanges in pipelines, the flanges are pressed apart with great force using hydraulic and/or mechanical spreader tools. Due to the risk of crushing, it is very risky in these cases to perform adequate cleaning and maintenance of sealing surfaces manually. This can result in maintenance not being carried out in accordance with applicable procedures or a process plant having to be dismantled and pipe parts removed for repairs.

### Description of Prior Art

US2451729 describes a grinding machine that can be hand-operated or machine-driven, and which uses cutting blades and grinding stones that are mounted alternately in a rotating plate that is clamped over a flange.

WO2022152401 shows a grinding machine for large surfaces, but which can also be used on flanges. The surface or flange is machined and ground so that it is evenly flat.

CN109551336 shows manual grinding of flanges, using a ring with grinding blocks. The flange is clamped onto a workbench before grinding the gasket groove.

CN108637845 shows similar manual grinding of flanges. Sandpaper is placed in the gasket groove, then a special tool is placed over the sandpaper and grinding is performed.

### Objects of the invention

The invention aims to significantly improve maintenance work performed on flanged connections, as well as to enable minor repairs of sealing surfaces in the field to be carried out by ordinary maintenance personnel in a safe and efficient manner. By improving the current method for this type of process to a more automated process, the quality of maintenance work performed will be significantly improved. A more uniform maintenance methodology will be achieved that is less dependent on the personal influence of the individual mechanic. With regular use, significant savings can be achieved by preventing costly repairs, avoiding leaks and environmental pollution, as well as being able to immediately repair minor damage, where otherwise specialized personnel with special tools would have to be hired to repair the damage, or repairs would have to be postponed until the next splitting of the flange in question.

The invention may improve HSE for the personnel performing the work due to its low weight, few exposed moving parts, and generally low risk during use. This applies to both personnel and equipment. It also promotes good ergonomics by reducing the need for prolonged repetitive movements by the mechanic performing the work, as the grinding machine according to the invention performs this task.

The grinding machine according to the invention may mainly be manufactured in aluminum and be lightweight. It is very easy to use and does not require the use of specialized personnel. The machine's design and construction enable access to areas that were previously difficult to reach using conventional methods. The fact that, once installed, it requires little intervention from the mechanic during use also makes it very useful in locations that would otherwise be associated with a high risk of crushing injuries for the mechanic.

### Summary of the invention

According to the invention, a grinding machine is provided for grinding and polishing sealing surfaces in sealing grooves on flanges, wherein the grinding machine comprises a frame adapted to be clamped onto the flange, wherein the frame comprises a plurality of slots extending radially outward, where each slot in the frame comprises a movable fastening device that runs through the frame and is adapted to be clamped against a rear side of the flange, as well as a rotatable grinding wheel centrally mounted in the frame, where the grinding wheel comprises several slots that run radially outward, where each slot to the grinding wheel comprises a movable grinding head having a profile adapted for insertion into the sealing groove on the flange, and a drive motor for rotation of the grinding wheel, wherein the grinding heads are adapted to rotate against the sealing surfaces in the sealing groove under application of axial pressure.

The frame of the grinding machine may comprise four arms, each with its own slot.

At least the frame is made of aluminum.

Each fastening device may comprise a rod in the form of a screw threaded over all or part of its length, an adjustable support plate on the screw for adjusting axial distance to the flange, and nuts for clamping the grinding machine to the flange.

The nuts may be thumb nuts attached to each end of the screw for manual tightening.

The grinding wheel of the grinding machine may be mounted on a shaft, wherein the shaft is configured as a pneumatic piston arranged to apply axial pressure to press the grinding heads of the grinding wheel against the sealing surfaces in the sealing groove on the flange.

The shaft may be connected to a pressure regulator mounted in a control panel.

Furthermore, the grinding wheel may be attached to the shaft by a profiled magnetic attachment.

The drive motor is preferably an air-driven motor connected to a toothed belt for driving the grinding wheel.

Furthermore, the drive motor may be mounted on one of the arms of the frame and connected to a first drive on the arm which drives the toothed belt and which transmits the power to a second drive on the shaft of the grinding wheel.

The toothed belt system may be enclosed on the arm of the frame and covered by a cover.

The cover may include a slot that corresponds to the slot on the frame for the passage of a fastening device.

The grinding heads may have a trapezoidal profile and be covered with an abrasive cloth that cleans/grinds the sealing surface.

The abrasive cloth may be a synthetic cloth comprising grains of aluminum oxide.

The grinding heads are advantageously freely movable in the radial slots of the grinding plate and are arranged to follow the sealing groove on the flange.

### Brief description of drawings

Preferred embodiments of the invention will be described in more detail below with reference to the accompanying figures, in which:

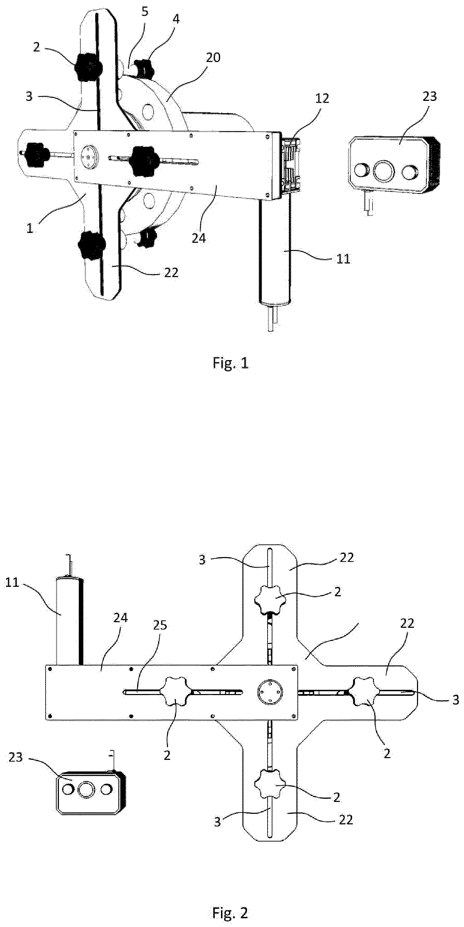

Figure 1 shows a grinding machine according to the invention mounted on a flange.
Figure 2 shows the grinding machine according to the invention as seen from the front.
Figure 3 shows the grinding machine according to the invention seen from the rear, i.e. from the side facing the flange during use.
Figure 4 shows a grinding wheel included in the grinding machine according to the invention.
Figure 5 shows an exploded view of the grinding machine according to the invention.

### Detailed description of embodiments disclosed in the drawings

The invention relates to a grinding machine that cleans and repairs sealing surfaces in flanges, such as industrial flanges, by grinding/polishing, and is intended for use both in the field and in workshops. The grinding machine can be used on most standardized flange types used in the industry.

The grinding machine comprises a frame 1 that is adapted to be clamped onto a flange 20. The frame 1 comprises several slots 3 that run radially outward, each slot 3 comprising a movable fastening device 2 that runs through the frame 1 and is adapted to be clamped against the back of the flange 20.

As shown in the example, the frame 1 can be four-armed and made of aluminum. The four-armed aluminum frame 1 is clamped along the outer diameter of the flange 20 by adjusting the fastening devices 2 to correspond to the outer diameter of the flange. This is done by sliding the fastening devices along the slots 3 in the four arms 22 of the frame 1 to the correct position according to the markings on the grinding machine. The fastening devices 2 are secured at the correct position by tightening nuts 4, such as thumb nuts, to the fastening device's screw 5 for clamping along the four arms 22. The grinding machine is self-centering due to four-point clamping.

Each fastening device may therefore comprise a rod in the form of screw 5, which is threaded along its entire length or a part thereof, an adjustable mounting plate 6 for adjusting the axial distance to flange 20, and nuts 4 for clamping the grinding machine to flange 20.

The axial distance from the grinding machine to the surface to be machined can be adjusted by sliding the mounting plate 6 of the fastening device along the center post of the fastening device 2 on the screw 5 and securing it at the correct diameter by tightening a set screw in the mounting plate 6.

The grinding machine also comprises a rotatable grinding wheel 7 centrally mounted in the frame 1. The grinding wheel 7 is equipped with radially displaceable grinding heads 8 which have a profile adapted for insertion into the sealing groove on the flange 20. The grinding heads 8 are preferably freely movable in radial slots 10 in the grinding wheel 7 and can thus follow the sealing groove to be treated without applying radial forces that could damage the sealing surfaces. As shown in the figures, the grinding wheel 7 may comprise four radial slots 10 that run outwards.

The correct grinding wheel 7 and grinding heads 8 are selected based on size, flange type, material quality, and desired grinding effect. The grinding heads 8 are coated with synthetic cloth comprising aluminum oxide grains for a good and even grinding effect on most metals. The desired abrasive effect is selected based on the grain size of the mentioned aluminum oxide grains and the axial pressure of the grinding heads against the substrate in combination with speed. Because the grinding medium is flexible and gentle on the substrate, the grinding machine can run for a long time without affecting the tolerance limits of the sealing groove. There is very little risk of damage to the flange or sealing surfaces when using the machine.

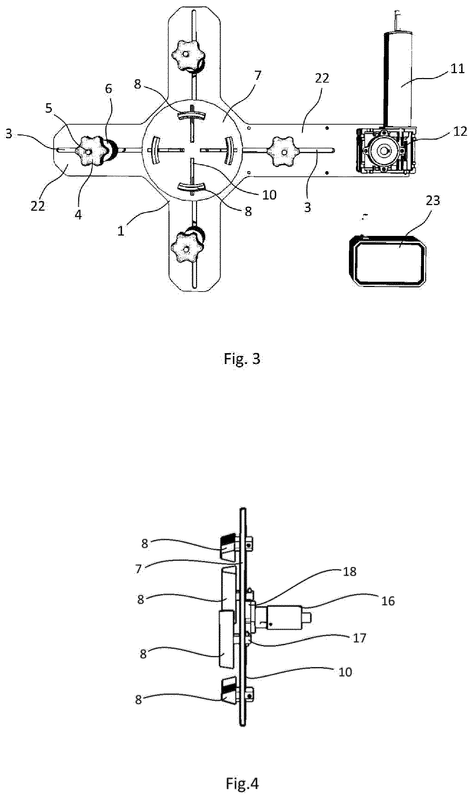

As shown in Figs. 3 and 4, the grinding heads 8 may be slightly curved, with the curvature selected depending on the radius of the sealing groove. The grinding heads 8 also preferably have a trapezoidal profile.

The center diameter of the sealing groove in the flange 20 is measured and the grinding heads 8 are mounted in the four slots 10 of the grinding wheel in the correct position corresponding to the center diameter of the sealing groove using the markings on the machine and is secured with corresponding locking pin 17 on the back of the grinding wheel 7. The grinding wheel 7 with the grinding heads 8 is lifted up and placed in the flange's 20 sealing groove/sealing surface. Secured temporarily using a magnet or elastic band. The grinding machine is lifted in place over the flange surface and is secured by tightening the four thumb nuts 4 on the back of the flange 20.

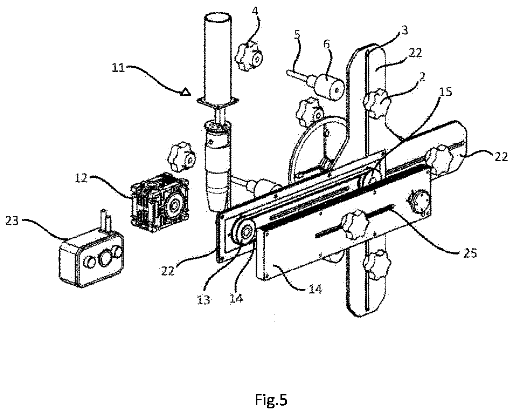

The grinding machine shaft and grinding wheel can be connected using a profiled magnetic attachment 18. The drive source is preferably a cylindrical air motor 11 mounted in a suitable mounting device on a reduction gear 12 on one of the frame's 1 four arms 22. As shown in Fig. 5, the air motor 11 can be mounted in an enclosure. The reduction gear 12 has an output shaft at 90° to the input shaft. A drive 13, preferably made of aluminum, for a toothed belt 14 is mounted on the output shaft. The grinding wheel's drive shaft 16 passes through the grinding machine's center-mounted bearing and has a drive 15, preferably made of aluminum, for the toothed belt 14 at the end. The driving force is transmitted from the motor/reduction gear located on one of the machine's arms 22 to the grinding wheel's drive shaft 16 via the toothed belt 14. Rotation in the air motor 11 will thus be transmitted to rotary motion in the grinding wheel 7 where the four grinding heads 8 are mounted.

As shown in Fig. 5, among others, the toothed belt system can be enclosed on the arm of the frame 1 and covered by a cover 24. One of the fastening devices 2 will then naturally run through the enclosure, and the cover 24 is therefore equipped with a corresponding slot 25 like the slot on the arm 22 of the frame 1. The arm 22 on which the toothed belt system is mounted may be longer than the other arms.

The shaft 16 that drives the grinding wheel 7 is configured as a pneumatic piston and can apply axial pressure to the sealing surface using a pressure regulator. The pressure regulator can be mounted in a control panel 23.

Machining of the sealing surfaces is thus achieved by rotating the grinding heads 8 against the sealing surfaces in the sealing groove while applying axial pressure.

## Claims

1. A grinding machine for grinding and polishing sealing surfaces in sealing grooves on flanges (20), **characterized in that** the grinding machine comprises:
a frame (1) adapted to be clamped onto the flange (20), wherein the frame (1) comprises a plurality of slots (3) extending radially outward, each slot (3) of the frame (1) comprising a displaceable fastening device (2) extending through the frame (1) and adapted to be clamped against a rear side of the flange (20),
a rotatable grinding wheel (7) centrally mounted in the frame (1), wherein the grinding wheel (7) comprises a plurality of slots (10) extending radially outward,
wherein each slot (10) of the grinding wheel (7) comprises a displaceable grinding head (8) having a profile adapted for insertion into the sealing groove on the flange (20), and
a drive motor (11) for rotating the grinding wheel (7),
wherein the grinding heads (8) are adapted to rotate against the sealing surfaces in the sealing groove during application of axial pressure.

2. The grinding machine according to claim 1, wherein the frame (1) comprises four arms (22), each with its own slot (3).

3. The grinding machine according to claim 1, wherein at least the frame (1) is made of aluminum.

4. The grinding machine according to claim 1, wherein each fastening device (2) comprises a rod in the form of a screw (5) that is threaded over all or part of its length, an adjustable contact plate (6) on the screw (5) for adjusting axial distance to the flange (20), and nuts (4) for clamping the grinding machine to the flange (20).

5. The grinding machine according to claim 4, wherein said nuts (4) are thumb nuts attached to each end of the screw (5) for manual tightening.

6. The grinding machine according to claim 1, wherein the grinding wheel (7) is mounted on a shaft (16), wherein the shaft (16) is configured as a pneumatic piston arranged to apply axial pressure to press the grinding heads (8) of the grinding wheel (7) against the sealing surfaces in the sealing groove on the flange (20).

7. The grinding machine according to claim 6, wherein the shaft (16) is connected to a pressure regulator mounted in a control panel (23).

8. Grinding machine according to claim 6, wherein the grinding wheel (7) is attached to the shaft (16) by a profiled magnetic attachment (18).

9. Grinding machine according to claim 1, wherein the drive motor (11) is an air-driven motor connected to a toothed belt (14) for driving the grinding wheel (7).

10. Grinding machine according to claims 2, 6, and 9, wherein the drive motor (11) is mounted on one of the arms of the frame (1) and is connected to a first drive (13) on the arm that drives the toothed belt (14) and transmits the power to a second drive (15) on the shaft (16) of the grinding wheel (7).

11. The grinding machine according to claim 10, wherein the toothed belt system is enclosed on the arm of the frame (1) and is covered by a cover (24).

12. The grinding machine according to claim 11, wherein the cover (24) comprises a slot (25) corresponding to the slot on the frame (1) for the passage of a fastening device (2).

13. The grinding machine according to claim 1, wherein said grinding heads (8) have a trapezoidal profile and are covered with an abrasive cloth that cleans/grinds the sealing surface.

14. The grinding machine according to claim 13, wherein the abrasive cloth is a synthetic cloth comprising grains of aluminum oxide.

15. The grinding machine according to claim 1, wherein said grinding heads (8) are freely movable in the radial slots (10) of the grinding plate (7) and are arranged to follow the sealing groove on the flange (20).
